# EUROPEAN PATENT SPECIFICATION

(11) **EP 1 397 933 B1**
(45) Date of publication and mention of the grant of the patent: **12.08.2009**
(21) Application number: 02739013.7
(22) Date of filing: 03.06.2002
(51) Int. Cl.: H04W 88/06, H04L 12/28

(54) **APPARATUS AND METHOD FOR PROVIDING ACCESS TO A PLMN USING SHORT-RANGE RADIO COMMUNICATION IN LOCAL PREMISES**
VORRICHTUNG UND VERFAHREN ZUR BEREITSTELLUNG DES ZUGRIFFS AUF EIN PLMN UNTER VERWENDUNG VON FUNKKOMMUNIKATION MIT KURZER REICHWEITE AN LOKALEN STANDORTEN
APPAREIL ET PROCEDE DESTINES A FOURNIR UN ACCES A UN RMTP PAR COMMUNICATION RADIO COURTE PORTEE EN LOCAL

(30) Priority: 05.06.2001 SE 0101986
(43) Date of publication of application: 17.03.2004
(73) Proprietor: TELIASONERA AB, 106 63 Stockholm (SE)
(72) Inventor: THOREN, Patrick, S-443 39 Lerum (SE)
(74) Representative: Hopfgarten, Nils
(86) International application number: PCT/SE2002/001048
(87) International publication number: WO 2002/100126

(56) References cited:
- EP-A1- 0 909 104
- WO-A1-01/13660
- WO-A2-01/67684
- US-A- 5 675 629

## Description

### Field of the Invention

The present invention relates to a method and a corresponding system for providing access to a Public Land Mobile Network (PLMN) from a local premise mobile telecommunication system.

### Background of the Invention

A growing problem within Public Land Mobile Networks (PLAN) today is that the available resources within certain radio spectrums are getting scarce. Several telecom equipment vendors and operators are trying to solve this problem. In one attempt of doing this, radio nodes, i.e. base stations or MSC, are moved out of the PLMN and in to the customer premises. The operator can thereafter give the customer a Service Level Agreement (SLA) that guarantees a certain level of capacity and therefore also charge as a premium service. If no precautions are taken then only a Best Effort Agreement (BEA) can be given, which in reality means virtually no guarantees at all.

As a result of the limited amount of resources within certain radio spectrums, the use of these radio spectrums have been regulated. For example, the regulations say that equipment that only somebody that has a license may own equipment that uses a bandwidth that requires a license. Thus, there are a number of drawbacks with moving radio nodes out of the PLMN. For example, moving radio node out of the PLMN to a customer premise is expensive and the customer gets high initial costs. Furthermore, since an operator with a license has to own the equipment, the same operator that owns the PLMN has to deliver all parts of the solution and the customer cannot buy different parts from different operators, i.e. bandwidth. In addition to this, there has to be a dedicated connection from customer premises to the operator equipment, which is inefficient in terms of bandwidth use, and since all call control is in the operator network, it will be hard to add new services. Finally, parts of the enterprise services today are located in a PBX while some services are located in the PLMN. This creates inconsistency in service behaviour.

WO 01/13660 A1 discloses an access point for connecting a mobile telephone to a telecommunications network comprising first communications means for providing a wireless communications link to the mobile telephone, and second communications means for providing a communications link to the telecommunications network, where the access point is adapted to provide a wireless communications link to the telecommunications network, and the first communications means can be adapted to be operated according to Bluetooth standard.

US-A-5 675 629 describes a mobile station communicating with both a cellular network, by which it is assigned a mobile identification number, and to a cordless cellular base station utilizing the same cellular frequency range and communications protocol. The cordless cellular base station is connected to a public switched telephone network and is assigned a landline number. The cordless cellular base station acts as a conduit between the mobile station and the public switched telephone network.

EP-A1-0 909 104 discloses a cellular system and a cordless telephone system, which cordless telephone system is connected to a fixed wireline network, and a mobile station for communicating via both the cellular system and the cordless telephone system.

### Object of the Invention

Thus an object of the invention is to provide a new method apparatus, and system for providing access to a public mobile telecommunication network from a customer premises, which are less expensive, more flexible in terms of combining parts from different operators and adding new services, and especially more efficient in terms of bandwidth usage than prior art systems.

### Description of the Invention

The object above is achieved by the method, the apparatus, and the system defined in the accompanying claims.

According to one aspect of the invention, a method of providing a mobile unit access to a public mobile telecommunications network is provided. The mobile unit is associated with a subscriber in the public mobile telecommunications network and the access is provided at least partly by means of short range radio communication. By using short range radio communication, such as communication based on Bluetooth, there will be no need to have any radio communication within a radio frequency that requires a licence in order to provide access to a public mobile telecommunication network, for example from a restricted area such as a customer premises. Thus, equipment from any vendor can be used for providing the radio access and the solution will be more flexible and less expensive. At the same time, the mobile unit is associated to a subscriber in the public mobile telecommunication network, and thus all of the functionality of the public mobile telecommunication network can be used.

The providing of access comprises communicating short range radio signals to and from the mobile unit, converting the short range radio signals to other signals and vice versa, which other signals are adapted for a fixed network, and communicating the other signals to and from the public mobile telecommunications network. The other signals are communicated to and from the public mobile telecommunications network via a multi-service network. Thus, the access can be divided into two parts. The first part comprising the short range radio access, e.g. by means of Bluetooth, and a second part which is an access via a fixed multi-service network, such as an Internet Protocol (IP) Network. The signals from the mobile unit, may for example comprise coded speech, wherein the same coding as in the public mobile telecommunication network preferably has been used. The coded speech is transferred in the first part in the short range radio signals and is then in the second part in the other signals via the multi-service network to the public mobile telecommunication network. The transfer in the multiservice network for example uses the Session Initiation Protocol (SIP) for the set-up of a session. By using a multi-service network the traffic caused by the communication from said mobile unit to said public mobile telecommunication network may use transfer capacity that is shared with other traffic from the location where the mobile unit is situated. Thus the method according to the invention is more effective in terms of bandwidth usage.

According to another aspect of the invention, an apparatus for providing a mobile unit access to a public mobile telecommunications network is provided. The mobile unit is associated with a subscriber in the public mobile telecommunications network. The apparatus comprises short range radio communication means for communicating short range radio signals to and from the mobile unit. The short range radio communication means are operatively connected to the public mobile telecommunications network. Thus, instead of providing a radio access in the frequency range that is used in the public mobile telecommunication network, short range radio signals are used which are in another frequency range. However, note that there is no need to alter the data that are to be transferred, i.e. if coded speech is to be transferred from the mobile unit in short range radio signals the coded speech need not be altered, only included in a short range radio signal instead of in a radio signal in the frequency range of the public mobile telecommunication network as will be the case in the public mobile telecommunication network.

The apparatus further comprises converting means for converting the short range radio signals to other signals and vice versa, which other signals are adapted for a fixed network, and fixed communication means for communicating the other signals to and from the public mobile telecommunications network. The communication of the other signals to and from the public mobile telecommunications network is done via a multi-service network. In addition to means for the actual physical conversion from radio signals to electrical signals, optical signals etc., the converter also comprises means for adapting the data for transfer over the appropriate protocol in the multiservice network, such as incorporating the data in IP packets if the multi-service network uses IP.

A mobile unit for communication in a public mobile telecommunication network, which mobile unit is associated with a subscriber in the public mobile telecommunications network, is also provided. The mobile unit comprises first radio communication means for communicating short range radio signals to and from the public mobile telecommunications network. Since the mobile unit comprises means for short range radio communication, such as communication based on Bluetooth, the mobile unit is capable of accessing a public mobile telecommunication network at least partly by means of short range radio communication. Thus, equipment from any vendor can be used for providing the radio access and the equipment need not be owned by the operator. Thus, the solution will be more flexible and less expensive. At the same time, the mobile unit is associated to a subscriber in the public mobile telecommunication network, and thus all of the functionality of the public mobile telecommunication network can be used. The short range radio signals from the mobile unit, may for example comprise coded speech, wherein the same coding as in the public mobile telecommunication network preferably has been used.

The mobile unit preferably further comprises second radio communication means for communicating radio signals associated with the public mobile telecommunications network, and selector means for selecting between communicating short range radio signals via the first radio communication means or radio signals associated with the public mobile telecommunications network via the second radio communication means. For example, the selector can be set so as to select the second radio communication means as a default, and to select the first communication means when a short range radio network is detected. It should be noted that the use of the mobile unit should be transparent to the selection of the selector, i.e. a user should not notice any difference between the case when the public mobile telecommunication network is accessed via the first radio communication means and when it is accessed via the second radio communication means.

According to another aspect of the invention, a system for providing a mobile unit access to a public mobile telecommunications network is provided. The system comprises a mobile unit, which in turn comprises internal radio communication means for communicating short range radio signals. The mobile unit is associated with a subscriber in the public mobile telecommunications network. The system further comprises external radio communication means for communicating short range radio signals to and from the internal radio communication means. The external radio communication means are operatively connected to the public mobile telecommunications network.

The system according to the invention also comprises converter means for converting the short range radio signals to other signals and vice versa, which other signals are adapted for a fixed network, and fixed communication means for communicating the other signals to and from the public mobile telecommunications network. Preferably the mobile unit of the system further comprises radio communication means for communicating radio signals associated with the public mobile telecommunications network, and selector means for selecting between communicating short range radio signals via the internal radio communication means or the radio signals associated with the public mobile telecommunications network via the radio communication means. The communication of the other signals to and from the public mobile telecommunications network is done via a multi-service network.

### Grief Description of the Drawings

The invention will be further elucidated in the following with reference to the accompanying drawings, in which:
Fig. 1 shows a block diagram of a prior art system;
Fig. 2 shows a block diagram of an embodiment of a system according to the invention;
Fig. 3 shows a block diagram of an embodiment of an apparatus according to the invention; and
Fig. 4 shows a block diagram of an embodiment of a mobile unit according to the invention.

### Description of Preferred Embodiments

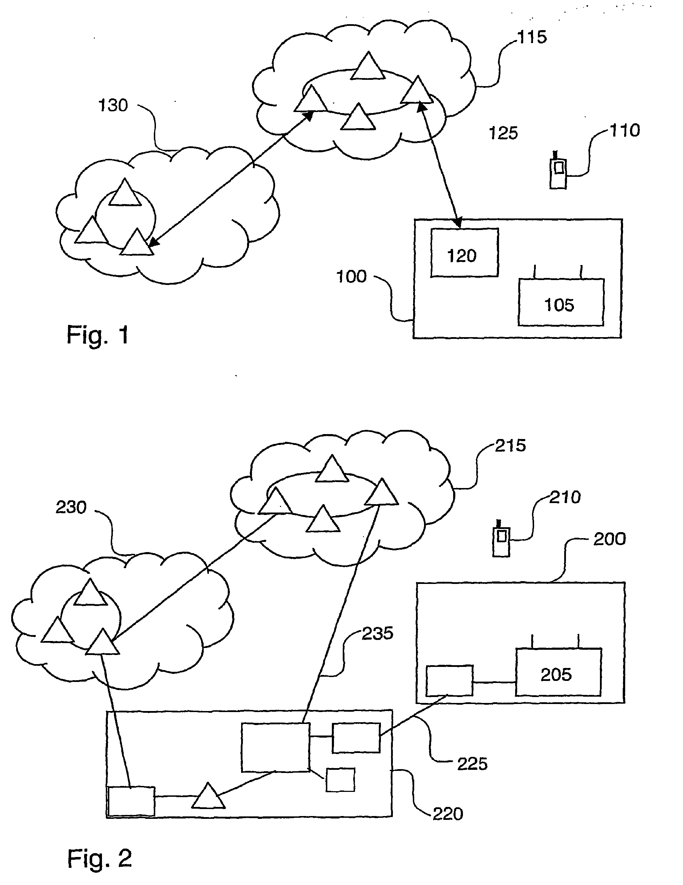

Fig. 1 shows a block diagram of a prior art network. A customer premises node 100 comprises radio communication means 105, which communicate radio signals to and from a mobile unit 110. Furthermore, the customer premises node 100 is connected to a Public Land Mobile Network 115 (PLMN) via an interface 120 and a real time connection 125. The radio signals have a frequency within a frequency range that requires a license, i.e. the frequency is within the same frequency range as is used in the PLMN 115. Finally, the PLMN 115 is connected to a Public Switched Telecommunication Network 130 (PSTN).

Fig. 2 shows a block diagram of an embodiment of a system according to the invention. A customer premises node 200 comprises external radio communication means 205, which communicate short range radio signals to and from a mobile unit 210. The mobile unit 210 comprises internal radio communication means (not shown), which communicate short range radio signals to and from the external radio communication means 205. Furthermore, the customer premises node 200 is connected to a PLMN 215 via a service node 220 in a multi-service network. The mobile unit 210 is associated to a subscriber in the PLMN 215, i.e. the mobile unit 210 can be identified in the PLMN, associated to a subscriber, located in the network, etc. The customer premises node 200 is connected to the service node via a connection 225 in the multi-service network. The connection may share resources with other connections from the customer premises to the service node, said other connections carrying other data- and telecommunication traffic from the customer premises. Furthermore, the PLMN 215 is connected to a PSTN 230 and the service node 220 is also connected to the PSTN 230.

Thus, when access is to be made from the mobile unit 210 to the PLMN 215 in Fig. 2, short range radio signals are sent from the internal radio communication means (not shown) in the mobile unit to the external radio communication means 205 in the customer premises node 200. The short range radio signals that are received in the external communication means 205, are converted to signals adapted to be sent on the connection 225 to the service node 220. The mobile unite might be a combined module handling PLMN (GSM) and "short range radio". Bluetooth is an access of this kind, an other type of accesses e.g. 802.11b. The converted signals are sent together with other signals to the service node 220, which in turn will extract the converted signals and forward them to the PLMN. Since the service node will generally serve more than one customer premises nodes the service node 220 will aggregate traffic from these customer premises nodes and send it to the PLMN on the connection 235.

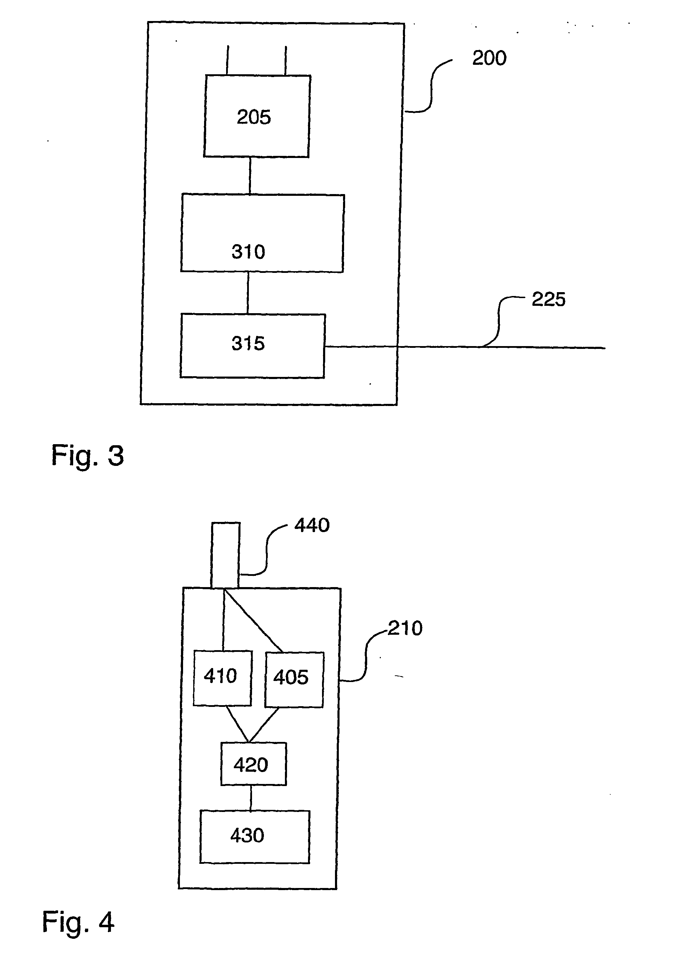

Fig. 3 shows a block diagram of an embodiment of an apparatus 200 according to the invention. The apparatus 200 comprises short range radio communication means 205, which communicate short range radio signals to and from a mobile unit (not shown). Furthermore, the apparatus 200 comprises converter means 310 for converting the short range radio signals to other signals and vice versa, whereby the other signals being adapted for a fixed network, such as an IP network. Finally, the apparatus 200 comprises fixed communication means 315 for communicating the other signals to and from the public mobile telecommunications network on the connection 225, e.g. via said IP network.

Fig. 4 shows a block diagram of an embodiment of a mobile unit 210 according to the invention. The mobile unit 210 comprises first radio communication means 405 for communicating short range radio signals to and from a PLMN (not shown). The mobile unit 210 also comprises second radio communication means 410 for communicating radio signals associated with the PLMN to and from the PLMN. Finally, the mobile unit 210 comprises selector means 420 for selecting between communicating data, such as coded speech, from a processing unit 430 in short range radio signals via the first radio communication means 405 or radio signals associated with the PLMN via the second radio communication means 410. The selected signals are finally sent via an antenna 440.

It is understood that a variety of modifications and combinations of the embodiments above are possible within the scope of the invention as is defined by the accompanying claims.

## Claims

1. A method for providing a mobile unit (210) access to a public mobile telecommunications network (215) said mobile unit (210) being associated with a subscriber in said public mobile telecommunications network (215), wherein said access is provided at least partly by means of short range radio communication, wherein the providing of access comprises the steps of:
communicating short range radio signals to and from said mobile unit (210),
converting said short range radio signals to second signals and vice versa, said second signals being adapted for a fixed network; and
communicating said second signals to and from said public mobile telecommunications network (215) via a multi-service network;
and maintaining the original coding of the data from the mobile unit (210) , included in the short range radio signals.

2. An apparatus (200) for providing a mobile unit (210) access to a public mobile telecommunications network (215), said mobile unit (210) being associated with a subscriber in said public mobile telecommunications network (215), comprising:
short range radio communication means (205) for communicating, short range radio signals to and from said mobile unit (210), said short range radio communication means (205) being operatively connected to said public mobile telecommunications network(215),
converting means (310) for converting said short range radio signals to second signals and vice versa, said second signals being adapted for a fixed network; and
fixed communication means (315) for communicating said second signals to and from said public mobile telecommunications network (215), **characterized in**
**that** the apparatus (200) is arranged to maintain the original coding of the data from the mobile unit (210) , included in the short range radio signal, and in that the fixed communication means (315) are arranged to communicate said second signals to and from said public mobile telecommunications network (215) via a multi-service network.

3. A system for providing a mobile unit (210) access to a public mobile telecommunications network (215), comprising:
a mobile unit (210) comprising internal radio communication means (405) for communicating short range radio signals, said mobile unit (210) being associated with a subscriber in said public mobile telecommunications network (215).
external radio communication means (205) for communicating short range radio signal to and from said internal radio communication means (405), said external radio communication means (205) being operatively connected to said public mobile telecommunications network (215),
converter means (310) for converting said short range radio signals to second signals and vice versa, said second signals being adapted for a fixed network; and fixed communication means (315) for communicating said second signals to and from said public mobile telecommunications network (215) **characterized in that** the system is arranged to maintain the original coding of the data from the mobile unit (210) included in the short range radio signal and **in that** the fixed communication means (315) are arranged to communicate said second signals to and from said public mobile telecommunications network (215) via a multi-service network.

4. A system according to claim 3 wherein said mobile unit (210) further comprises:
radio communications means (410) for communicating radio signals associated with said public mobile telecommunications network (215) ; and
selector means (420) for selecting between communicating short range radio signals via said internal radio communication means (405) or said radio signals associated with said public mobile telecommunications network (215) via said radio communication means (410).

## Patentansprüche

1. Verfahren, einer mobilen Einheit (210) Zugriff auf ein öffentliches mobiles Telekommunikationsnetz (215) zu gewähren, welche mobile Einheit (210) mit einem Teilnehmer in dem öffentlichen mobilen Telekommunikationsnetz (215) verknüpft ist, wobei der Zugriff wenigstens teilweise mit Hilfe von Kursreichweiten-Funkkommunikation gewährt wird, wobei das Gewähren von Zugriff die Schritte aufweist:
die Kurzreichweiten-Funksignale zu und von der mobilen Einheit (210) zu kommunizieren;
die Kurzreichweiten-Funksignale in zweite Signale und umgekehrt umzuwandeln, welche zweiten Signale für ein festes Netz angepasst sind; und
die zweiten Signale zu und von den öffentlichen mobilen Telekommunikationsnetx (215) über ein Mehrdienstnetz zu kommunizieren;
und die ursprüngliche Codierung der Daten von der mobilen Einheit (210), die in den Kurzreichweiten-Funksignalen enthalten sind, beizubehalten.

2. Vorrichtung (200), um einer mobilen Einheit (210) Zugriff zu einem öffentlichen mobilen Telekommunikationsnetz (215) zu gewähren, welche mobile Einheit (210) mit einem Teilnehmer in dem öffentlichen mobilen Telekommunikationsnetz (215) verknüpft ist, die aufweist:
Kurzreichweiten-Funkkonmiunikationsmittel (205), um Kursreichweiten-Funksignale zu und von der mobilen Einheit (210) zu kommunizieren, welche Kurzreichweiten-Funkkommunikationsmittel (205) betriebsmäßig mit dem öffentlichen mobilen Telekommunikationsnetz (215) verknüpft sind;
Umwandlungsmittel (310) zum Umwandeln der Kurzreichweiten-Funksignale in zweite Signale und umgekehrt, welche zweiten Signale für ein festes Netz angepasst sind; und
feste Kommunikationsmittel (315) zum der zweiten Signale zu und von dem öffentlichen mobilen Telekommunikationsnetz (25),
**dadurch gekennzeichnet, dass** die Vorrichtung (200) dazu ausgebildet ist, die ursprüngliche Codierung der Daten von der mobilen Einheit (210), die in dem Kurzreichweiten-Funksignal enthalten sind, beizubehalten, und dass die festen Kommunikationsmittel (315) dazu ausgebildet sind, die zweiten Signale zu und von dem öffentlichen mobilen Telekommunikationsnetz (215) über ein Mehrdienstnetz zu kommunizieren.

3. System, um einer mobilen Einheit (210) Zugriff zu einem öffentlichen mobilen Telekommunikationsnetz (215) zu gewähren, das aufweist:
eine mobile Einheit (210), die interne Funkkommunikationsmittel (405) zum Kommunizieren von Kursreichweiten-Funksignalen aufweist, welche mobile Einheit (210) mit einem Teilnehmer in dem öffentlichen mobilen Teilekommunikationsnetz (215) verknüpft ist;
externe Funkkoinmunikationsmittel (205) zum Kommunizieren von Kurzreichweiten-Funksignalen zu und von den internen Funkkommunikationsmitteln (405), welche externen Funkkommunikationsmittel (205) betriebsmäßig mit dem öffentlichen mobilen Telekommunikationsnetz (215) verbunden sind;
Umwandlermittel (310) zum Umwandeln der Kurzreichweiten-Funksignale in zweite Signale und umgekehrt, welche zweiten Signale für ein festes Netz angepasst sind; und
feste Kommunikationsmittel (315) zum Kommunizieren der zweiten Signale zu und von dem öffentlich mobilen Telekommunikationsnetz (215),
**dadurch gekennzeichnet, dass** das System dazu ausgebildet ist, die ursprüngliche Codierung der Daten von der mobilen Einheit (210), die in dem Kurzreichweiten-Funksignal enthalten sind, beizubehalten;
und dass die festen Kommunikationsmittel (315) dazu ausgebildet sind, die zweiten Signale zu und von dem öffentlichen mobilen Telekommunikationsnetz (215) über ein Mehrdienstnetz zu kommunizieren.

4. System nach Anspruch 3, **dadurch gekennzeichnet, dass** die mobile Einheit (210) weiter aufweist:
Funkkommunikationsmittel (410) zum Kommunizieren von Funksignalen, die mit dem öffentlichen mobilen Telekommunikationsnetz (215) verknüpft sind; und
Auswählmittel (420) zum Auswählen dazwischen, Kurzreichweiten-Funksignale über die internen Funkkommunikationsmittel (405) oder die Funksignale, die mit dem öffentlichen mobilen Telekommunikationsnets (215) verknüpft sind, über die Funkkommunikationsmittel (410) zu kommunizieren.

## Revendications

1. Procédé destiné à fournir à une unité mobile (210) un accès à un réseau public de télécommunications mobiles (215), ladite unité mobile (210) étant associée à un abonné dans ledit réseau public de télécommunications mobiles (215), dans lequel ledit accès est fourni au moins partiellement au moyen de communication radio à courte portée, dans lequel la fourniture d'accès comprend les étapes consistant à :
communiquer des signaux radio à courte portée à et de ladite unité mobile (210) ;
convertir lesdits signaux radio à courte portée en seconds signaux et vice versa, lesdits seconds signaux étant adaptés pour un réseau fixe ; et
communiquer lesdits seconds signaux audit et dudit réseau public de télécommunications mobiles (215) par l'intermédiaire d'un réseau multiservice ;
et maintenir le codage d'origine des données de l'unité mobile (210), incluses dans les signaux radio à courte portée.

2. Appareil (200) destiné à fournir à une unité mobile (210) un accès à un réseau public de télécommunications mobiles (215), ladite unité mobile (210) étant associée à un abonné dans ledit réseau public de télécommunications mobiles (215), comprenant ;
des moyens de communication radio à courte portée (205) destinés à communiquer des signaux radio à courte portée à et de ladite unité mobile (210), lesdits moyens de communication radio à courte portée (205) étant connectés de façon opérationnelle audit réseau public de télécommunications mobiles (215) ;
des moyens de conversion (310) destinés à convertir lesdits signaux radio à courte portée en seconds signaux et vice versa, lesdits seconds signaux étant, adaptés pour un réseau fixe ; et
des moyens de communication fixes (315) destinés à communiquer lesdits seconds signaux audit et dudit réseau public de télécommunications mobiles (215), **caractérisé en ce que** l'appareil (200) est agencé pour maintenir le codage d'origine, des données de l'unité mobile (210) incluses dans le signal radio à courte portée, et **en ce que** les moyens de communication fixes (315) sont agencés pour communiquer lesdits seconds signaux audit et dudit réseau public de télécommunications mobiles (215) par l'intermédiaire d'un réseau multiservice.

3. Système destiné à fournir à une unité mobile (210) un accès à un réseau public de télécommunications mobiles (215), comprenant :
une unité mobile (210) comprenant des moyens de communication radio internes (405) destinés à communiquer des signaux radio à courte portée, ladite unité mobile (210) étant associée à un abonné dans ledit réseau public de télécommunications mobiles (215) ;
des moyens de communication radio externes (205) destinés à communiquer des signaux radio à courte portée audits et desdits moyens de communication radio internes (405), lesdits moyens de communication radio externes (205) étant connectés de façon opérationnelle audit réseau public de télécommunications mobiles (215),
des moyens convertisseurs (310) destinés à convertir lesdits signaux radio à courte portée en seconds signaux et vice versa, lesdits seconds signaux étant adaptés pour un réseau fixé ; et
des moyens de communication fixes (315) destinés à communiquer lesdits seconds signaux audit et dudit réseau public de télécommunications mobiles (215), **caractérisé en ce que** le système est agencé pour maintenir le codage d'origine des données de l'unité mobile (210) incluses dans le signal radio à courte portée, et **en ce que** les moyens de communication fixes (315) sont agencés pour communiquer lesdits seconds signaux audit et dudit réseau public de télécommunications mobiles (215) par l'intermédiaire d'un réseau multiservice.

4. Système selon la revendication 3, dans lequel ladite unité mobile (210) comprend en outre :
des moyens de communication radio (410) pour communiquer des signaux radio associés audit réseau public de télécommunications mobiles (215) ; et
des moyens sélecteurs (420) destinés à sélectionner entre la communication de signaux radio à courte portée par l'intermédiaire de lesdits moyens de communication radio internes (405) ou la communication lesdits signaux radio associés audit réseau public de télécommunications mobiles (215) par l'intermédiaire desdits moyens de communication radio (410).
